# EUROPEAN PATENT APPLICATION

(11) **EP 1 661 763 A1**
(43) Date of publication of application: **31.05.2006**
(21) Application number: 05111390.0
(22) Date of filing: 28.11.2005
(51) Int. Cl.: B60R 13/10

(54) **License plate holder and method of mounting a license plate**

(30) Priority: 29.11.2004 NL 1027614
(71) Applicant: Ehrensperger, Johannes Abraham, 1742 AE Schagen (NL)
(72) Inventor: Ehrensperger, Johannes Abraham, 1742 AE Schagen (NL)
(74) Representative: Vernout, Robert

(57) **Abstract**

A license plate holder that can be fixed to a vehicle, wherein mounting means for mounting a license plate form part of the holder, wherein second mounting means for mounting a second, temporary license plate form part of the holder, and wherein the second mounting means are so arranged that when two license plates are mounted in the holder, the second license plate extends substantially on or at a very short distance from the first license plate.

## Description

The invention relates to a license plate holder that can be fixed to a vehicle, wherein mounting means for mounting a license plate form part of the holder.

Such a license plate holder is known, for example from Swiss patent CH-A-688035. In a number of countries, among which the Netherlands, temporary license plates, so called dealer's license plates, are used when an existing vehicle is offered for sale by a car dealer. Furthermore, temporary export license plates or IRS license plates are used. These temporary license plates are secured to an existing permanent license plate or to an existing license plate holder by means of temporary fastening devices, such as elastic bands. The dealer needs to carry these temporary fastening devices on his person all the time or collect them from a stockroom every time he needs them. They can easily be lost in this manner.

The object of the invention is to alleviate these inconveniences, among other things.

In order to accomplish that object, second mounting means for mounting a second, temporary license plate form part of the holder, which second mounting means are so arranged that when two license plates are mounted in the holder, the second license plate extends substantially on or a very short distance in front of the first license plate. The first mounting means are preferably of a more permanent nature than the second mounting means, more in particular, the second mounting means can be manually loosened without using any auxiliary means, i.e. without tools.

Preferably, the second mounting means only extend along and near the edges of the license plate. As a result, the view of the license plate is not obstructed, as is the case when elastic bands are used, whilst furthermore the whole looks more professional. Preferably, the first mounting means comprise projections and/or edges that extend at least partially from the circumferential edge of the second license plate in use, in such a manner that the first license plate is retained between said projections or edges and the holder. The second mounting means, too, preferably comprise projections and/or edges that extend at least partially from the circumferential edge of the second license plate in use, in such a manner that the second license plate is retained between said projections or edges and the first license plate. In an especially preferred embodiment, the second license plate is retained between the projections and/or edges of the first and the second mounting means.

Preferably, at least one projection or edge of the second mounting means can be moved outwards, in such a manner that it does not retain the license plate in the outward position, whereas it does retain the license plate in the inward position. Preferably, the projection or edge of the second mounting means is capable of resilient bending movement in outward direction. In this way it is possible to remove the temporary license plate in a quick and simple manner.

The projections preferably comprise bevelled edges, such that the license plate urges the projection outwards upon exertion of a manual pressure, so that the license plate can be moved behind the projection. In this way it is possible to fit a temporary license plate in a quick and simple manner.

The invention also relates to a method of mounting a second, temporary license plate on or a short distance in front of a first, permanent license plate by means of a license plate holder comprising first and second mounting means, wherein the first license plate is mounted to a vehicle by means of said first mounting means and wherein the second license plate is mounted to the vehicle by means of said second mounting means.

The invention will now be explained in more detail by means of an embodiment as illustrated in the figures, in which:
Figure 1 is a side view of a vehicle fitted with two license plate holders;
Figure 2 is a perspective view of a license plate holder as shown in figure 1 in mounted condition;
Figure 3 is a cross-sectional view of the license plate holder of figure 2;
Figure 4 is an exploded perspective view of the license plate holder of figure 2; and
Figure 5 is a perspective view of the license plate holder of figure 2 without license plates.

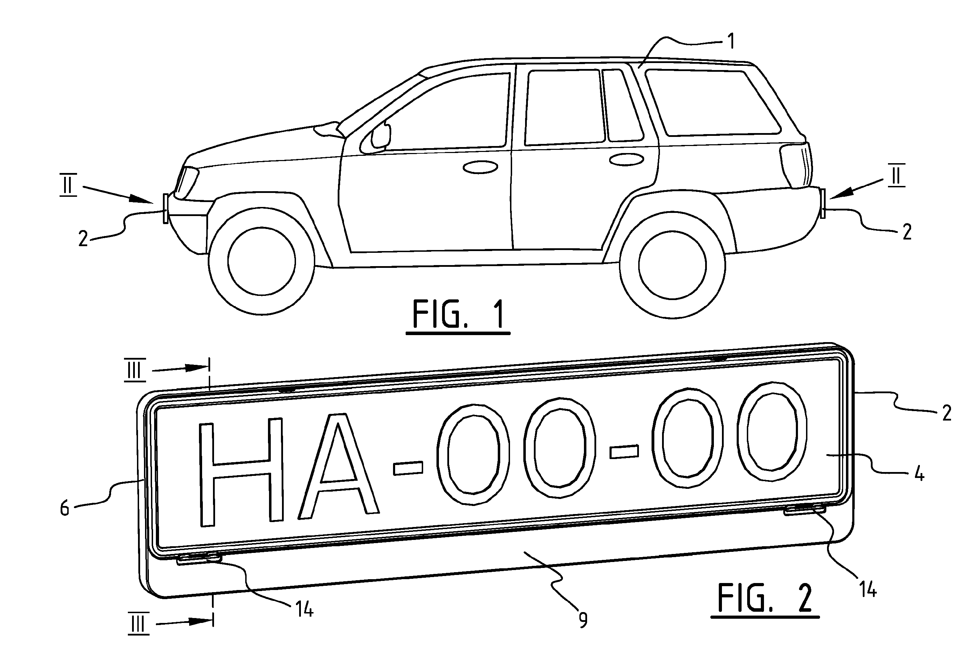

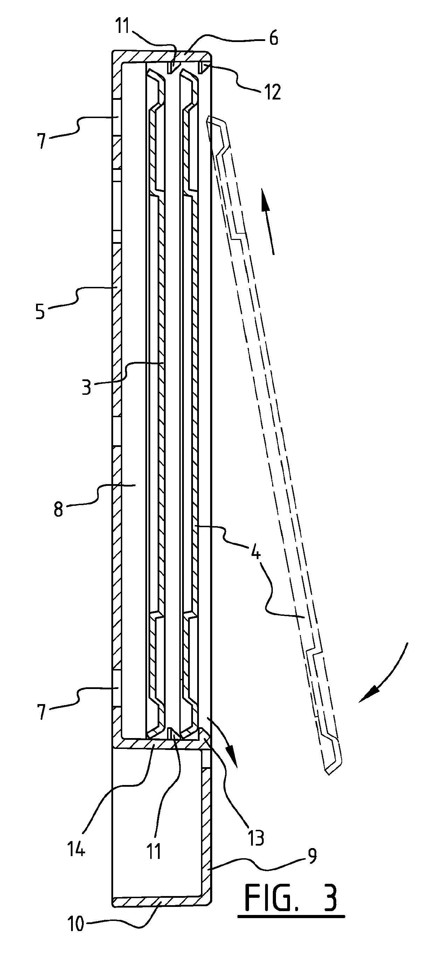

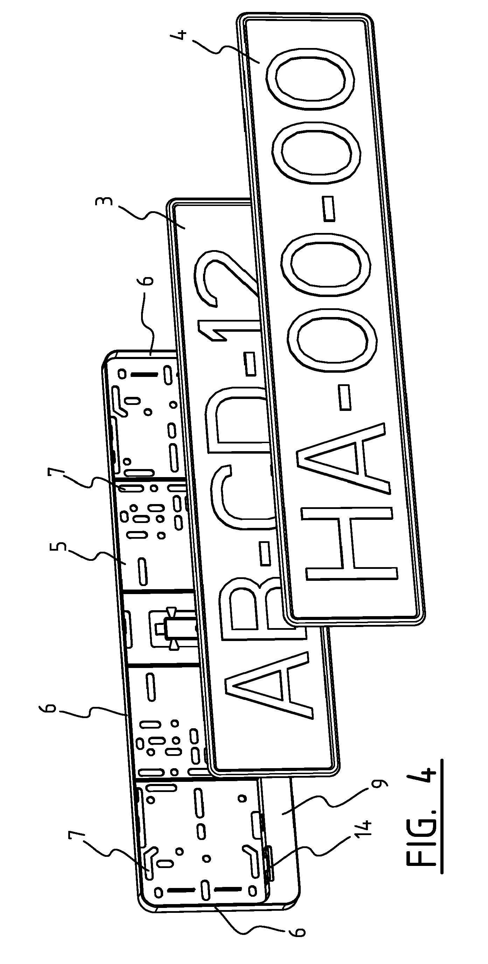

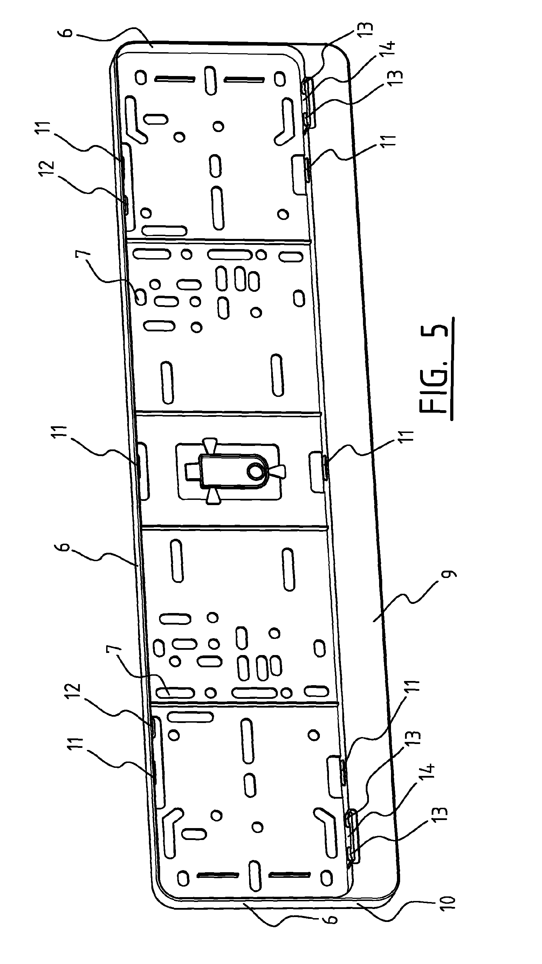

According to figure 1, a passenger car 1 is provided with plastic license plate holders 2 as shown in figure 2, and in more detail in figures 3 - 5, on the front side and the rear side thereof. Each license plate holder 2 is made in one piece. First, permanent license plates 3 are mounted in the holders. Temporary dealer's license plates 4 are mounted on top of the permanent license plates 3.

The license plate holder 2 comprises a mounting plate 5, approximately the size of the license plates to be mounted, which is provided with an upright edge 6 along its circumferential edge. The mounting plate 5 is provided with a multitude of screw holes and screw slots 7 for mounting the license plate holder 2 to the passenger car 1. The mounting plate 5 is provided with vertical ribs 8, which keep the permanent license plate 3 spaced from the mounting plate, so that sufficient space for screw heads remains behind the license plate 34. A text strip 9 extends from the front side of the lower part of the upright edge 6, on which a text can be placed, for example by the car dealer. The underside and the sides of the text strip 9 are provided with a downward edge 10, which joins the upright edge 6.

As shown in the cross-sectional view of figure 3, first mounting means comprising projections 11 extends inwardly from the central part of the upright edge 6 of the license plate holder. The projections 11 are spaced from the mounting plate 5. Seen in the cross-sectional view of figure 3, the spacing between the projections 11 and the ribs 8 equals of slightly exceeds the thickness of a license plate. The projections 11 are provided with bevelled edges on the front side, thus allowing the permanent license plate 3 to slip behind the projections 11 by slightly deforming upon being pressed into the license plate holder 2.

Second mounting means comprising upper projections 12 and lower projections 13 extends inwardly from the end of the upright edge 6, seen in the cross-sectional view of figure 3. The spacing between the projections 11 and the projections 12, 13 equals of slightly exceeds the thickness of a license plate. The projections 12, 13, too, are provided with bevelled edges, thus allowing a temporary license plate 4 to slip behind the projections 12, 13 upon being pressed into the license plate holder 2. Unlike the projections 11, however, the lower projections 13 are urged outwards, so that the plate need not deform in order to be secured in place. To that end, respective pairs of lower projections 13 form part of two flexible lips 14 extending from the edge of the mounting plate, which have been formed by forming a recess around the lips 14 in the upright edge 6 and the text strip 9.

The temporary license plate 4 can readily be removed by bending the lips 14 in outward, i.e. downward direction, so that the projections 13 no longer retain the license plate 4.

Although the invention has been described by means of an embodiment, many variations are possible within the scope of the invention as defined in the claims.

## Claims

1. A license plate holder that can be fixed to a vehicle, wherein mounting means for mounting a license plate form part of the holder, **characterized in that** second mounting means for mounting a second, temporary license plate form part of the holder, which second mounting means are so arranged that when two license plates are mounted in the holder, the second license plate extends substantially on or a very short distance in front of the first license plate.

2. A license plate holder according to claim 1, wherein the first mounting means are of a more permanent nature than the second mounting means.

3. A license plate holder according to claim 1 or 2, wherein the second mounting means can be manually loosened without using any auxiliary means.

4. A license plate holder according to claim 1, 2 or 3, wherein the second mounting means only extend along and near the edges of the license plate.

5. A license plate holder according to any one of the preceding claims 1 - 4, wherein the first mounting means comprise projections and/or edges that extend at least partially from the circumferential edge of the second license plate in use, in such a manner that the first license plate is retained between said projections or edges and the holder.

6. A license plate holder according to any one of the preceding claims 1 - 5, wherein the second mounting means comprise projections and/or edges that extend at least partially from the circumferential edge of the second license plate in use, in such a manner that the second license plate is retained between said projections or edges and the first license plate.

7. A license plate holder according to any one of the preceding claims 1 - 6, wherein at least one projection or edge of the second mounting means can be moved outwards, in such a manner that it does not retain the license plate in the outward position, whereas it does retain the license plate in the inward position.

8. A license plate holder according to any one of the preceding claims 1 - 7, wherein the projection or edge of the second mounting means is capable of resilient bending movement in outward direction.

9. A license plate holder according to any one of the preceding claims 1 - 8, wherein the projections or edges comprise bevelled edges, such that the license plate urges the projection outwards upon exertion of a manual pressure, so that it can be moved behind said projection or edge.

10. A method of mounting a second, temporary license plate on or a short distance in front of a first, permanent license plate by means of a license plate holder comprising first and second mounting means, wherein the first license plate is mounted to a vehicle by means of said first mounting means and wherein the second license plate is mounted to the vehicle by means of said second mounting means.
